# EUROPEAN PATENT APPLICATION

(11) **EP 3 603 940 A1**
(43) Date of publication of application: **05.02.2020**
(21) Application number: 17902439.3
(22) Date of filing: 24.03.2017
(51) Int. Cl.: B29C 65/08

(54) **ULTRASONIC WELDING MEMBER AND ULTRASONIC WELDING METHOD**

(71) Applicant: Tsuchiya Co., Ltd., Nagoya-shi, Aichi 460-8330 (JP); Mitsubishi Heavy Industries, Ltd., Chiyoda-ku Tokyo 1008332 (JP)
(72) Inventor: YOSHIDA Osamu, Nagoya-City Aichi 460-8330 (JP); HAYASHI Hiroaki, Nagoya-City Aichi 460-8330 (JP); TSUJI Kotaro, Nagoya-City Aichi 460-8330 (JP); HORIZONO Hideki, Tokyo 108-8215 (JP); ISHIKAWA Naomoto, Tokyo 108-8215 (JP); TAKAYANAGI Toshiyuki, Tokyo 108-8215 (JP)
(74) Representative: J A Kemp LLP
(86) International application number: PCT/JP2017/011988
(87) International publication number: WO 2018/173249

(57) **Abstract**

Disclosed are: an ultrasonic welding member which is independent of a first member and a second member and which is held between a surface to be welded of the first member and a surface to be welded of the second member prior to ultrasonic welding between the surface to be welded of the first member and the surface to be welded of the second member having a shape parallel to or fitted into the surface to be welded of the first member, the ultrasonic welding member characterized by including a thermoplastic resin and satisfying a discontinuous forming requirement, an outside opening requirement, and a bonding place reduction requirement; and an ultrasonic welding method using the ultrasonic welding member. The ultrasonic welding member may include a plurality of streaks at least in a part thereof. The ultrasonic welding member may be a substantially lattice-shaped fabric or textile mesh at least in a part thereof. When the ultrasonic welding member is held between the surface to be welded of the first member and the surface to be welded of the second member, crossing parts of threads of the mesh may form a bonding place between the ultrasonic welding member and the surface to be welded of the first member and a bonding place between the ultrasonic welding member and the surface to be welded of the second member.

## Description

### TECHNICAL FIELD

The present invention relates to an ultrasonic welding member and an ultrasonic welding method. More specifically, the present invention relates to an ultrasonic welding member independent of a first member and a second member which are to be welded, and an ultrasonic welding method using the same.

### BACKGROUND ART

As a welding method for welding two members which are made of a thermoplastic resin, an ultrasonic welding method for welding members by applying ultrasonic vibration has been used widely. In this regard, there has been generally known a method in which a rib is integrally formed in advance in one of thermoplastic resins to be welded, and this rib pattern is used as a weld start point when ultrasonic vibration is applied.

However, a method for forming, in advance, rib-shaped protrusions integrally on one of the thermoplastic resin members to be welded is limited to a molding method such as injection molding, and if the surface of the member to be welded has a complex shape, it is very difficult to form rib-shaped protrusions thereon.

In recent years, in technical fields where high mechanical strength is required, such as in transportation apparatuses including aircrafts and ships, composite materials having a multilayer structure of fibers such as carbon fibers and resins, etc. has been actively developed. In such a composite material, the resin layer is generally thin, and if rib-shaped protrusions are formed by injection molding, the resin layer peels off, and fuzzy fibers are generated. Therefore, the composite material has a problem that it is substantially impossible to form the rib-shaped protrusions.

JP-A-08-150669 (JP-B-3536385) (Patent Literature 1) discloses an ultrasonic welding net as shown in FIG. 1 and an ultrasonic welding method using the same as ultrasonic welding means to avoid formation of rib-shaped protrusions. In the figure, reference numeral 1 denotes an ultrasonic welding net, and reference numeral 2 denotes streaks constituting the net. Ultrasonic welding is performed by inserting the ultrasonic welding net between members to be welded, and the members can be welded with a high degree of freedom, even if it is impossible to form rib-shaped protrusions on the members by injection molding. However, the ultrasonic welding net described above is configured such that the major axis of the cross section of each streak extends in the thickness direction of the net, and the streaks entirely conform to the surfaces of the members to be welded. The ultrasonic welding net described above has low productivity, and thus, has increased cost. Furthermore, since the net has a flat structure, air is trapped in the welded part and voids are likely to remain, resulting in causing a disadvantage that the weld strength is reduced, and the appearance is deteriorated.

### CITATION LIST

### PATENT LITERATURE

PATENT LITERATURE 1: JP-A-08-150669 (JP-B-3536385)

### SUMMARY OF INVENTION

### TECHNICAL PROBLEM

In view of the various disadvantages described above, the problem to be addressed by the present invention is to provide: an ultrasonic welding member that does not need to form rib-shaped protrusions in advance, is easily manufactured, prevents voids from remaining in a welded part, and is capable of ensuring sufficient weld strength; and an ultrasonic welding method using the same.

### SOLUTION TO PROBLEM

As a result of intensive studies, the present inventors have found that the forgoing problems can be addressed by using an ultrasonic welding member independent of two members to be welded, and by forming the ultrasonic welding member such that: bonding places between the ultrasonic welding member and the surfaces to be welded are discontinuously present in at least a part thereof; non-bonding places are open to the outside so as to ensure an air path; and a ratio of areas between bonding places and non-bonding places is adjusted to fall within a predetermined range.

Specifically, the configuration of the present invention for addressing the above problems is as follows.
[1]. An ultrasonic welding member which is independent of a first member and a second member and which is held between a surface to be welded of the first member including a thermoplastic resin and a surface to be welded of the second member including a thermoplastic resin and having a shape parallel to or fitted into the surface to be welded of the first member prior to ultrasonic welding between the surface to be welded of the first member and the surface to be welded of the second member,
   the ultrasonic welding member including a thermoplastic resin, and
   the ultrasonic welding member being configured such that:
   when the ultrasonic welding member is held between the surface to be welded of the first member and the surface to be welded of the second member, bonding places between the ultrasonic welding member and the surface to be welded of the first member and/or bonding places between the ultrasonic welding member and the surface to be welded of the second member are discontinuously present in at least a part of the ultrasonic welding member;
   when the ultrasonic welding member is held between the surface to be welded of the first member and the surface to be welded of the second member, all of non-bonding places between the ultrasonic welding member and the surface to be welded of the first member and/or non-bonding places between the ultrasonic welding member and the surface to be welded of the second member are open to an outside of the ultrasonic welding member; and
   when the ultrasonic welding member is held between the surface to be welded of the first member and the surface to be welded of the second member, a ratio of a total area of the bonding places between the ultrasonic welding member and the surface to be welded of the first member to a total area of the non-bonding places between the ultrasonic welding member and the surface to be welded of the first member is less than 1, and/or a ratio of a total area of the bonding places between the ultrasonic welding member and the surface to be welded of the second member to a total area of the non-bonding places between the ultrasonic welding member and the surface to be welded of the second member is less than 1.
[2]. The ultrasonic welding member according to [1] described above, wherein the ultrasonic welding member at least partially includes a plurality of streaks.
[3]. The ultrasonic welding member according to [2] described above, wherein the ultrasonic welding member is, at least partially, a substantially lattice-shaped fabric or textile mesh, and when the ultrasonic welding member is held between the surface to be welded of the first member and the surface to be welded of the second member, crossing parts of threads of the mesh form the bonding places between the ultrasonic welding member and the surface to be welded of the first member and the bonding places between the ultrasonic welding member and the surface to be welded of the second member.
[4]. The ultrasonic welding member according to any one of [1] to [3] described above, wherein the ultrasonic welding member has at least partially a pattern of a plurality of dots arranged at substantially regular intervals or arranged irregularly.
[5]. The ultrasonic welding member according to any one of [1] to [4] described above, wherein the thermoplastic resin included in the ultrasonic welding member is selected from the group consisting of PP, PA6, PA66, PC, PS, PVC, polyester, ABS, PPS, PEEK, and PEKK.
[6]. An ultrasonic welding method comprising
   a step for holding an ultrasonic welding member which is independent of a first member and a second member between a surface to be welded of the first member including a thermoplastic resin and a surface to be welded of the second member including a thermoplastic resin and having a shape parallel to or fitted into the surface to be welded of the first member, and
   a step for welding the first member and the second member by applying ultrasonic vibration to the ultrasonic welding member,
   wherein the ultrasonic welding member includes a thermoplastic resin, and
   in the step for holding the ultrasonic welding member between the surface to be welded of the first member and the surface to be welded of the second member:
   the ultrasonic welding member is disposed such that bonding places between the ultrasonic welding member and the surface to be welded of the first member and/or bonding places between the ultrasonic welding member and the surface to be welded of the second member are present discontinuously in at least a part of the ultrasonic welding member;
   the ultrasonic welding member is disposed such that all of non-bonding places between the ultrasonic welding member and the surface to be welded of the first member and/or non-bonding places between the ultrasonic welding member and the surface to be welded of the second member are open to an outside of the ultrasonic welding member; and
   the ultrasonic welding member is disposed such that a ratio of a total area of the bonding places between the ultrasonic welding member and the surface to be welded of the first member to a total area of the non-bonding places between the ultrasonic welding member and the surface to be welded of the first member is less than 1, and/or a ratio of a total area of the bonding places between the ultrasonic welding member and the surface to be welded of the second member to a total area of the non-bonding places between the ultrasonic welding member and the surface to be welded of the second member is less than 1.
[7]. The ultrasonic welding method according to [6] described above, wherein the ultrasonic welding member at least partially includes a plurality of streaks.
[8]. The ultrasonic welding method according to [7] described above, wherein the ultrasonic welding member is, at least partially, a substantially lattice-shaped fabric or textile mesh, and when the ultrasonic welding member is held between the surface to be welded of the first member and the surface to be welded of the second member, crossing parts of threads of the mesh form the bonding places between the ultrasonic welding member and the surface to be welded of the first member and the bonding places between the ultrasonic welding member and the surface to be welded of the second member.
[9]. The ultrasonic welding method according to any one of [6] to [8] described above, wherein the ultrasonic welding member has at least partially a pattern of a plurality of dots arranged at substantially regular intervals.
[10]. The ultrasonic welding method according to any one of [6] to [9] described above, wherein the thermoplastic resin included in the ultrasonic welding member is selected from the group consisting of PP, PA6, PA66, PC, PS, PVC, polyester, ABS, PPS, PEEK, and PEKK.

The subject of the present invention (items [1] to [5] above) relating to the ultrasonic welding member is the member itself. The first member and the second member are not included in the scope of the present invention relating to the ultrasonic welding member.

### ADVANTAGEOUS EFFECTS OF INVENTION

The ultrasonic welding member according to the present invention is handled independently of the first member and the second member which are to be welded, whereby there is no need to provide in advance rib-shaped protrusions for welding.

Further, the ultrasonic welding member has less design restrictions in thickness in a direction between two members to be welded (especially when a mesh is adopted), and the volume of the ultrasonic welding member can be reduced. Thus, the ultrasonic welding member provides high manufacturing efficiency, and can reduce manufacturing time and cost.

Furthermore, the ultrasonic welding member is formed such that: bonding places (weld start points) between the ultrasonic welding member and the surfaces to be welded are discontinuously present in at least a part thereof; non-bonding places are open to the outside so as to ensure an air path; and a ratio of areas between bonding places and non-bonding places is adjusted to fall within a predetermined range. Thus, voids are less likely to remain in the welded part, and high airtightness of the bonded part can be obtained, whereby sufficient weld strength can be ensured.

These effects are similarly obtained when the above ultrasonic welding method is used.

### BRIEF DESCRIPTION OF DRAWINGS

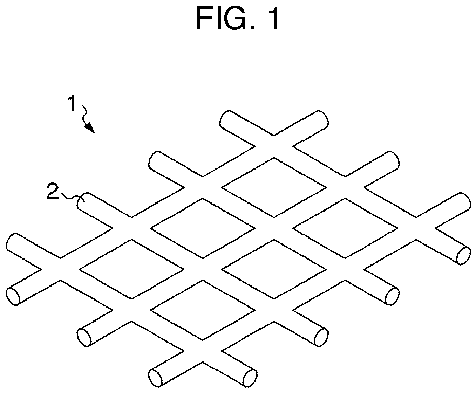

FIG. 1 is a view illustrating an ultrasonic welding net disclosed in Patent Literature 1 as a conventional art.
FIG. 2(a) is a perspective view of an ultrasonic welding member according to one embodiment of the present invention, and FIG. 2(b) is a sectional view of the ultrasonic welding member held between members to be welded.
FIG. 3(a) is a perspective view of an ultrasonic welding member according to one embodiment of the present invention, and FIG. 3(b) is a sectional view of the ultrasonic welding member held between members to be welded.
FIG. 4 is a perspective view of an ultrasonic welding member according to one embodiment of the present invention.
FIG. 5 shows a plan view and a partially enlarged sectional view of an ultrasonic welding member (ultrasonic welding mesh) according to one embodiment of the present invention.
FIG. 6 is a sectional view of the ultrasonic welding member (ultrasonic welding mesh), which is held between members to be welded, according to one embodiment of the present invention.

### DESCRIPTION OF EMBODIMENTS

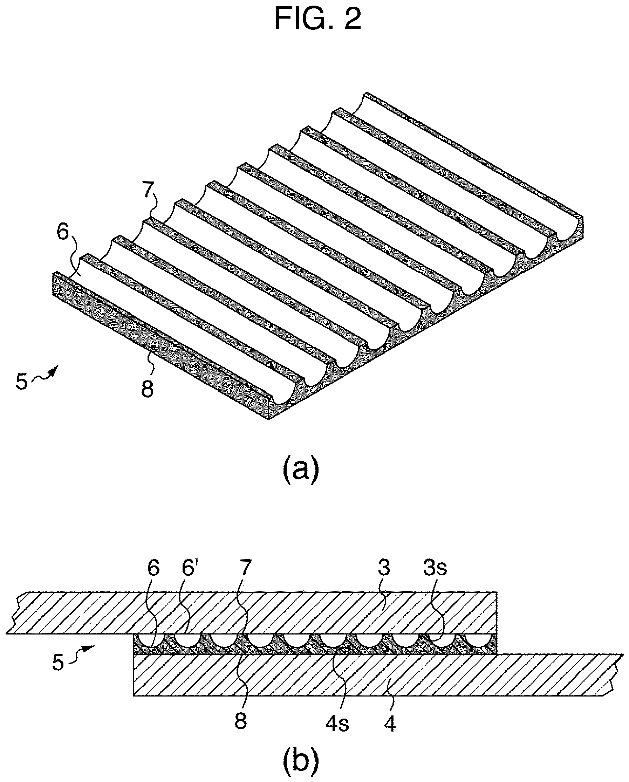

An ultrasonic welding member according to an embodiment of the present invention will be described with reference to FIG. 2.

In FIG. 2(a), reference numeral 5 denotes an ultrasonic welding member which has a flat and substantially cuboid shape and which is made of a thermoplastic resin. Reference numeral 6 denotes recesses in columns formed in one surface of the ultrasonic welding member 5 so as to be substantially parallel to each other, each of the recesses having a substantially semicircular cross section. Reference numeral 7 denotes a surface between the recesses of the ultrasonic welding member on the surface. Reference numeral 8 denotes the other surface of the ultrasonic welding member 5 which is substantially planar. The recesses 6 are arranged at substantially regular intervals and extend from one end to the other end of the surface, each of the recesses 6 having a depth substantially a half of or more than the thickness of the member.

Here, the total area of the surfaces 7 between recesses is preferably smaller than the total area of the parts between edges of recesses 6 (parts between a certain surface 7 between recesses and the adjacent surface 7 between recesses) on the surface contour. With this configuration, the total area of non-bonding places can be easily set to be greater than the total area of bonding places when the surface of the ultrasonic welding member 5 contacts the member to be welded, with the result that resource-saving and cost-saving welding is enabled with weld strength being ensured.

As shown in FIG. 2(b), welding can be performed such that the ultrasonic welding member 5 is held between a surface to be welded 3s of a first member 3 made of a thermoplastic resin and a surface to be welded 4s of a second member 4 made of a thermoplastic resin, and with this state, ultrasonic vibration is applied from an ultrasonic welding horn (not shown). Considering that, in general, both members to be welded have shapes substantially parallel to or fitted to each other, FIG. 2(b) shows the case where the surface to be welded 3s and the surface to be welded 4s are substantially parallel to each other. In a state where the ultrasonic welding member 5 is held between the surface to be welded 3s and the surface to be welded 4s as described above, the recesses 6 form non-bonding places 6' without being in contact with the surface to be welded 3s. Further, the surfaces 7 between recesses contact the surface to be welded 3s to form bonding places 7 (the surfaces 7 between recesses are approximated to bonding places 7 as long as the surface to be welded 3s and the surface to be welded 4s are parallel to each other and the ultrasonic welding member 5 has a cuboid shape). On the other hand, the other surface 8 of the ultrasonic welding member 5 is entirely in contact with the surface to be welded 4s to form a bonding place (bonding surface) 8.

The thermoplastic resin that is the material of the ultrasonic welding member 5 is preferably the same as the thermoplastic resin of the first member 3 and/or the thermoplastic resin of the second member 4. Alternatively, the thermoplastic resin that is the material of the ultrasonic welding member 5 preferably has a melting point lower than that of the thermoplastic resin of the first member 3 and/or the thermoplastic resin of the second member 4. Nonlimiting specific examples of such thermoplastic resins include PP, PA6, PA66, PC, PS, PVC, polyester, ABS, PPS, PEEK, and PEKK. It is preferable that the ultrasonic welding member 5 has certain flexibility as a whole from a viewpoint of responding to a variation in undulation on the surface to be welded.

Here, the bonding places 7 between the ultrasonic welding member 5 and the surface to be welded 3s are discontinuously formed in such a manner as to be separated from each other by the non-bonding places 6', respectively, (this is referred to as a "discontinuous forming requirement" below).

All of the non-bonding places 6' between the ultrasonic welding member 5 and the surface to be welded 3s are open to the outside of the ultrasonic welding member 5 (this is referred to as an "outside opening requirement" below), because the recesses 6 are formed to extend from one end to the other end of the surface of the ultrasonic welding member 5.

The ratio of the total area B of the bonding places 7 between the ultrasonic welding member 5 and the surface to be welded 3s to the total area A of the non-bonding places 6' between the ultrasonic welding member 5 and the surface to be welded 3s is less than 1, preferably less than 0.8, and more preferably less than 0.5 (this is referred to as a "bonding place reduction requirement" below). It is to be noted that, approximately, the total area B can be calculated as the sum of the areas of the surfaces 7 between recesses, and the total area A can be calculated as a value obtained by subtracting the total area B from the area of the surface of the ultrasonic welding member 5 before the recesses 6 are formed.

In other words, the structure described above can reduce the volume of the ultrasonic welding member as long as it satisfies the discontinuous forming requirement, the outside opening requirement, and the bonding place reduction requirement, and thus, the structure has high flexibility in design, has high manufacturing efficiency, and can reduce the manufacturing time and cost. Further, in the ultrasonic welding member, the bonding places (weld start points) between the ultrasonic welding member and the surface to be welded are discontinuously present, and the non-bonding places are open to the outside to ensure an air path. Moreover, in the ultrasonic welding member, the ratio of areas between the bonding places and the non-bonding places is adjusted to be less than 1, preferably less than 0.8, and more preferably less than 0.5, whereby voids are less likely to remain in a welded part (air accumulation is less likely to occur inside a weld layer), and high airtightness of a bonded part can be obtained. Thus, sufficient weld strength can be ensured.

It is noted that the outer shape of the ultrasonic welding member 5 is not necessarily flat and substantially cuboid, and can be changed to any shape according to the shape of the member to be welded. Each of the recesses 6 may have a substantially rectangular cross section or a substantially triangular cross section, instead of a substantially semicircular cross section. Further, the distance between the recesses 6 and the depth of each recess 6 are not particularly limited as long as the above three requirements are satisfied. From the viewpoint of reduction in material cost and resource saving, the distance between the recesses 6 is preferably smaller and the depth of each recess 6 is preferably larger, as long as the desired weld strength is ensured. For example, the average depth of the recesses 6 is more preferably two thirds or more of the thickness of the ultrasonic welding member 5.

Further, as an alternative embodiment, recesses in columns, each having a substantially semicircular cross section, may further be formed, in addition to the recesses 6, in one surface of the ultrasonic welding member 5 so as to be parallel to each other and so as to substantially perpendicularly intersect the recesses 6. In this configuration, the design range regarding the shape and arrangement of the newly provided recesses which form intersecting columns and the surfaces between the recesses can be set in the same manner as described above.

Further, as another alternative embodiment, the other surface 8 of the ultrasonic welding member 5 may be similarly formed with recesses and surfaces between recesses.

These structures can further reduce the cost of materials and improve manufacturing efficiency.

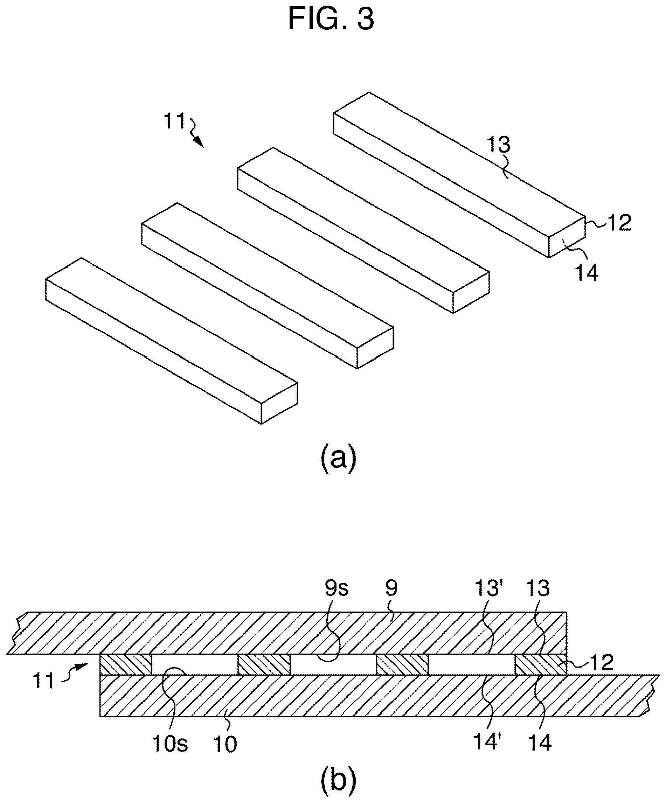

Next, an ultrasonic welding member according to another embodiment of the present invention will be described with reference to FIG. 3.

In FIG. 3(a), reference numeral 12 denotes an ultrasonic welding member piece which has a flat cuboid shape, has a substantially rectangular cross section, and extends in one direction. The ultrasonic welding member piece 12 is made of a thermoplastic resin. Reference numeral 13 denotes one surface of the ultrasonic welding member piece 12, and 14 denotes the other surface of the ultrasonic welding member piece 12. The ultrasonic welding member 11 is an assembly of a plurality of ultrasonic welding member pieces 12 which has substantially the same shape and which is arranged on the same plane so as to be substantially parallel to each other at substantially regular intervals.

Here, it is preferable that the total area of the surfaces 13 (or the surfaces 14) of the ultrasonic welding member pieces 12 is smaller than the total area of parts between the adjacent surfaces 13 (or the surfaces 14). With this configuration, the total area of non-bonding places can be easily set to be greater than the total area of bonding places when the surfaces 13 (or surfaces 14) of the ultrasonic welding member pieces 12 (that is, the ultrasonic welding member 11) contact the member to be welded, with the result that resource-saving and cost-saving welding is enabled with weld strength being ensured.

As shown in FIG. 3(b), welding can be performed such that the ultrasonic welding member 11 (assembly of the ultrasonic welding member pieces 12) is held between a surface to be welded 9s of a first member 9 made of a thermoplastic resin and a surface to be welded 10s of a second member 10 made of a thermoplastic resin, and with this state, ultrasonic vibration is applied from an ultrasonic welding horn (not shown). Actually, both members to be welded have shapes substantially parallel to or fitted to each other, and therefore, FIG. 3(b) shows the case where the surface to be welded 9s and the surface to be welded 10s are substantially parallel to each other. In a state where the ultrasonic welding member 11 is held between the surface to be welded 9s and the surface to be welded 10s as described above, non-bonding places 13' and non-bonding places 14' are formed in regions where the ultrasonic welding member pieces 12 are not present. Further, the surfaces 13 and surfaces 14 contact the surface to be welded 9s and the surface to be welded 10s to form bonding places 13 and bonding places 14, respectively (the surfaces 13 and the surfaces 14 are approximated to the bonding places 13 and the bonding places 14, respectively, as long as the surface to be welded 9s and the surface to be welded 10s are parallel to each other and the ultrasonic welding member pieces 12 are each equal in thickness).

As in the above embodiment, the thermoplastic resin that is the material of the ultrasonic welding member 11 is preferably the same as the thermoplastic resin of the first member 9 and/or the thermoplastic resin of the second member 10. Alternatively, the thermoplastic resin that is the material of the ultrasonic welding member 11 preferably has a melting point lower than that of the thermoplastic resin of the first member 9 and/or the thermoplastic resin of the second member 10. Specific examples of the thermoplastic resin are not particularly limited, and those described in the above embodiment may be used. It is preferable that the ultrasonic welding member pieces 12 have certain flexibility as a whole from a viewpoint of responding to a variation in undulation on the surface to be welded.

Here, the bonding places 13 between the ultrasonic welding member pieces 12 and the surface to be welded 9s are discontinuously formed in such a manner as to be separated from each other by the non-bonding places 13', respectively, (the "discontinuous forming requirement" is satisfied). Furthermore, the bonding places 14 between the ultrasonic welding member pieces 12 and the surface to be welded 10s are discontinuously formed in such a manner as to be separated from each other by the non-bonding places 14', respectively, (the "discontinuous forming requirement" is also satisfied in this case).

All of the non-bonding places 13' between the ultrasonic welding member pieces 12 and the surface to be welded 9s are open to the outside of the ultrasonic welding member 11, because the non-bonding places 13' are formed to extend from one end to the other end between the ultrasonic welding member pieces 12 (the "outside opening requirement" is satisfied). All of the non-bonding places 14' between the ultrasonic welding member pieces 12 and the surface to be welded 10s are open to the outside of the ultrasonic welding member 11, because the non-bonding places 14' are formed to extend from one end to the other end between the ultrasonic welding member pieces 12 (the "outside opening requirement" is also satisfied in this case).

The ratio of the total area B of the bonding places 13 between the ultrasonic welding member pieces 12 and the surface to be welded 9s to the total area A of the non-bonding places 13' between the ultrasonic welding member pieces 12 and the surface to be welded 9s is less than 1, preferably less than 0.8, and more preferably less than 0.5 (the "bonding place reduction requirement" is satisfied).

In addition, the ratio of the total area B' of the bonding places 14 between the ultrasonic welding member pieces 12 and the surface to be welded 10s to the total area A' of the non-bonding places 14' between the ultrasonic welding member pieces 12 and the surface to be welded 10s is less than 1, preferably less than 0.8, and more preferably less than 0.5 (the "bonding place reduction requirement" is satisfied).

It is to be noted that, approximately, the total area B (or the total area B') can be calculated as the sum of the areas of the surfaces 13 (or the surfaces 14), and the total area A (or the total area A') can be calculated as a value obtained by subtracting the total area B (or total area B') from the area corresponding to the surfaces 13 or the surfaces 14 in the outermost contour which is linearly formed for the whole ultrasonic welding member pieces 12 (i.e. the contour of the ultrasonic welding member 11 as an assembly).

As in the above-described embodiment, the structure described above can reduce the volume of the ultrasonic welding member as long as it satisfies the discontinuous forming requirement, the outside opening requirement, and the bonding place reduction requirement, and thus, the structure has high flexibility in design, has high manufacturing efficiency, and can reduce the manufacturing time and cost. Further, in the ultrasonic welding member, the bonding places (weld start points) between the ultrasonic welding member and the surface to be welded are discontinuously present, and the non-bonding places are open to the outside to ensure an air path. Moreover, in the ultrasonic welding member, the ratio of areas between the bonding places and the non-bonding places is adjusted to be less than 1, preferably less than 0.8, and more preferably less than 0.5, whereby voids are less likely to remain in a welded part (air accumulation is less likely to occur inside the welding member), and high airtightness of the bonded part can be obtained. Thus, sufficient weld strength can be ensured.

It is noted that the ultrasonic welding member pieces 12 do not have to be a flat cuboid having a substantially rectangular cross section, and can be changed to any shape in accordance with the shape of the member to be welded. Moreover, the arrangement of the ultrasonic welding member pieces 12 and the distance between the ultrasonic welding member pieces 12 are not particularly limited as long as the above three requirements are satisfied.

As an alternative embodiment, the ultrasonic welding member pieces 12 may be arranged substantially parallel to each other as described above in a part of the member to be welded, and the ultrasonic welding member pieces 12 may be arranged substantially parallel to each other in another direction in another part of the member to be welded. Further, the embodiment according to FIG. 2 and the embodiment according to FIG. 3 may be combined. As a result, more flexible welding design is enabled in accordance with the complex three-dimensional shape of the member to be welded, and in addition, the material cost can be reduced, and the manufacturing efficiency can be further improved.

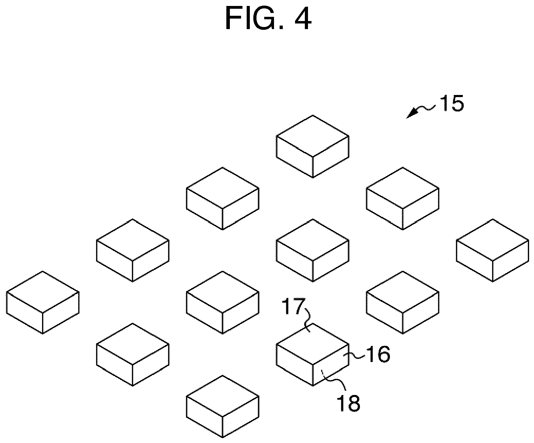

Next, an ultrasonic welding member according to still another embodiment of the present invention will be described with reference to FIG. 4.

In FIG. 4, reference numeral 16 denotes an ultrasonic welding member piece which has a flat cuboid shape with a substantially rectangular cross section, and which is made of a thermoplastic resin. Reference numeral 17 denotes one surface of the ultrasonic welding member piece 16, and 18 denotes the other surface of the ultrasonic welding member piece 16. An ultrasonic welding member 15 is an assembly of a plurality of ultrasonic welding member pieces 16 which has substantially the same shape and which is arranged at substantially regular intervals on the same plane so as to form a plurality of intersecting columns. Here, it is preferable that the total area A of the surfaces 17 (or the surfaces 18) of the ultrasonic welding member pieces 16 is smaller than the area obtained by subtracting the total area A from the area B defined by the outer contour of the whole surfaces 17 (or surfaces 18). With this configuration, the total area of non-bonding places can be easily set to be greater than the total area of bonding places when the surfaces 17 (or surfaces 18) of the ultrasonic welding member pieces 16 (that is, the ultrasonic welding member 15) contact the member to be welded, with the result that resource-saving and cost-saving welding is enabled with weld strength being ensured.

Although not shown, welding can be performed such that the ultrasonic welding member 15 (assembly of the ultrasonic welding member pieces 16) is held between a surface to be welded of a first member made of a thermoplastic resin and a surface to be welded of a second member made of a thermoplastic resin, and with this state, ultrasonic vibration is applied from an ultrasonic welding horn. In a state where the ultrasonic welding member 15 is held between the two surfaces to be welded as described above, non-bonding places are formed in regions where the ultrasonic welding member pieces 16 are not present. In addition, the surfaces 17 and the surfaces 18 are respectively in contact with the surfaces to be welded to form bonding places. (The surfaces 17 and the surfaces 18 are approximated to the bonding places, respectively, as long as the two surfaces to be welded are parallel to each other and the ultrasonic welding member pieces 16 are equal in thickness).

As in the above embodiments, the thermoplastic resin that is the material of the ultrasonic welding member 15 is preferably the same as the thermoplastic resin of the first member to be welded and/or the thermoplastic resin of the second member to be welded. Alternatively, the thermoplastic resin that is the material of the ultrasonic welding member 15 preferably has a melting point lower than that of the thermoplastic resin of the first member and/or the thermoplastic resin of the second member. Specific examples of the thermoplastic resin are not particularly limited, and those described in the above embodiments may be used.

Here, as for the first and second members to be welded, the bonding places between the ultrasonic welding member pieces 16 and the surfaces to be welded are discontinuously formed in such a manner as to be separated from each other by the non-bonding places (the "discontinuous forming requirement" is satisfied).

As for the first and second members to be welded, all of the non-bonding places between the ultrasonic welding member pieces 16 and the surfaces to be welded are open to the outside of the ultrasonic welding member 15 (the "outside opening requirement" is satisfied).

As for the first and second members to be welded, the ratio of the total area B of the bonding places between the ultrasonic welding member pieces 16 and the surfaces to be welded to the total area A of the non-bonding places between the ultrasonic welding member pieces 16 and the surfaces to be welded is less than 1, preferably less than 0.8, more preferably less than 0.5, still more preferably less than 0.4, and most preferably less than 0.3 (the "bonding place reduction requirement" is satisfied). It is noted that approximately, the total area B is calculated as the sum of the areas of the surface 17 (or the surface 18), and the total area A is calculated as a value obtained by subtracting the total area B from the area of the surface corresponding to the surfaces 17 or the area of the surface corresponding to the surfaces 18 in the outermost contour which is linearly formed for the whole ultrasonic welding member pieces 16 (i.e. the contour of the ultrasonic welding member 15 as an assembly).

As in the above-described embodiments, the structure described above can reduce the volume of the ultrasonic welding member as long as it satisfies the discontinuous forming requirement, the outside opening requirement, and the bonding place reduction requirement, and thus, the structure has high flexibility in design, has high manufacturing efficiency, and can reduce the manufacturing time and cost. Further, in the ultrasonic welding member, the bonding places (weld start points) between the ultrasonic welding member and the surface to be welded are discontinuously present, and the non-bonding places are open to the outside to ensure an air path. Moreover, in the ultrasonic welding member, the ratio of areas between the bonding places and the non-bonding places is adjusted to be less than 1, preferably less than 0.8, more preferably less than 0.5, still more preferably less than 0.4, and most preferably less than 0.3, whereby voids are less likely to remain in a welded part (air accumulation is less likely to occur inside the welding member), and high airtightness of the bonded part can be obtained. Thus, sufficient weld strength can be ensured.

It is noted that the ultrasonic welding member pieces 16 do not have to be a flat cuboid having a substantially rectangular cross section, and can be changed to any shape in accordance with the shape of the member to be welded. For example, the ultrasonic welding member pieces 16 may be flat and substantially columnar. Moreover, the arrangement of the ultrasonic welding member pieces 16 and the distance between the ultrasonic welding member pieces 16 are not particularly limited as long as the above three requirements are satisfied. For example, the ultrasonic welding member pieces 16 may be arranged irregularly.

Further, as an alternative embodiment, the embodiment according to FIG. 4 may be combined with the embodiment according to FIG. 2 and/or the embodiment according to FIG. 3. As a result, more flexible welding design is enabled in accordance with the complex three-dimensional shape of the member to be welded, and in addition, the material cost can be reduced, and the manufacturing efficiency can be further improved.

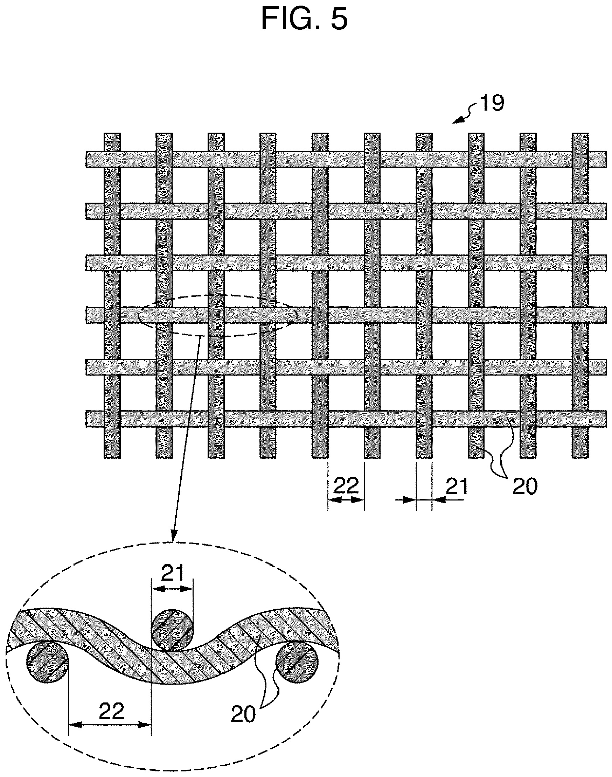

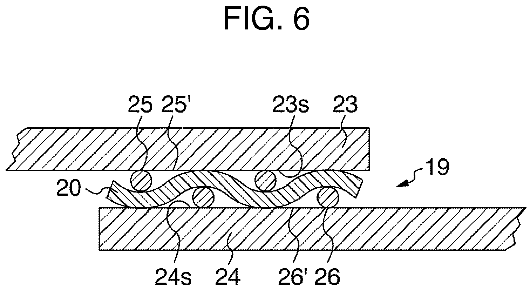

Next, a mesh ultrasonic welding member according to one embodiment of the present invention will be described with reference to FIGS. 5 and 6 (fabric will be illustrated).

FIG. 5 shows a plan view and a partially enlarged cross section of an ultrasonic welding mesh. In the figure, reference numeral 19 denotes the ultrasonic welding mesh, 20 denotes threads (warp and weft threads each having a substantially circular cross section) which constitute a fabric of the ultrasonic welding mesh 19 and which are alternately interwoven at substantially right angles, 21 denotes the outer diameter of each thread, and 22 is a space between adjacent threads constituting the fabric (that is, a "mesh opening"). The outer diameter 21 of each of the threads 20 is not particularly limited, and may be, for example, about 0.1 to 1 mm, and more preferably within a range from 0.15 to 0.6 mm. The mesh opening 22 is not particularly limited, and may be, for example, about 0.1 to 2 mm, and more preferably within a range from 0.2 to 1.2 mm.

As can be understood from the partially enlarged cross section of FIG. 5, the woven fabric of the ultrasonic welding mesh 19 is woven such that warp threads are interlaced with weft threads at substantially right angles substantially on one plane, and thus, the warp threads and weft threads are undulated between adjacent crossing points. If the woven fabric structure consisting of the warp threads and the weft threads is comprehensively observed, it can be seen that protrusions are formed at the crossing points, and recesses are formed between the crossing points. Due to the woven fabric having such a three-dimensional structure, it is easy to make the total area of non-bonding places significantly greater than the total area of bonding places when one surface or the back surface of the ultrasonic welding mesh 19 contacts the member to be welded, with the result that resource-saving and cost-saving welding is enabled with weld strength being ensured.

As shown in FIG. 6, welding can be performed such that the ultrasonic welding mesh 19 is held between a surface to be welded 23s of a first member 23 made of a thermoplastic resin and a surface to be welded 24s of a second member 24 made of a thermoplastic resin, and with this state, ultrasonic vibration is applied from an ultrasonic welding horn (not shown). Actually, both members to be welded have shapes substantially parallel to or fitted to each other, and therefore, FIG. 6 shows the case where the surface to be welded 23s and the surface to be welded 24s are substantially parallel to each other. In a state where the ultrasonic welding mesh 19 is held between the surface to be welded 23s and the surface to be welded 24s as described above, non-bonding places 25' and non-bonding places 26' are formed in regions where threads 20 of the ultrasonic welding mesh 19 are not present. In addition, the threads 20 of the ultrasonic welding mesh 19 contact the surface to be welded 23s and the surface to be welded 24s to form bonding places 25 and bonding places 26.

As in the above embodiments, the thermoplastic resin that is the material of the ultrasonic welding mesh 19 is preferably the same as the thermoplastic resin of the first member 23 to be welded and/or the thermoplastic resin of the second member 24 to be welded. Alternatively, the thermoplastic resin that is the material of the ultrasonic welding mesh 19 preferably has a melting point lower than that of the thermoplastic resin of the first member 23 and/or the thermoplastic resin of the second member 24. Specific examples of the thermoplastic resin are not particularly limited, and those described in the above embodiments may be used. It is preferable that the ultrasonic welding mesh 19 has certain flexibility as a whole from a viewpoint of responding to a variation in undulation on the surface to be welded.

Here, the bonding places 25 between the threads 20 of the ultrasonic welding mesh 19 and the surface to be welded 23s are discontinuously formed in such a manner as to be separated from each other by the non-bonding places 25', respectively (the "discontinuous forming requirement" is satisfied). Furthermore, the bonding places 26 between the threads 20 of the ultrasonic welding mesh 19 and the surface to be welded 24s are discontinuously formed in such a manner as to be separated from each other by the non-bonding places 26', respectively (the "discontinuous forming requirement" is also satisfied in this case).

All of the non-bonding places 25' between the threads 20 of the ultrasonic welding mesh 19 and the surface to be welded 23s are open to the outside of the ultrasonic welding mesh 19, because the ultrasonic welding mesh 19 has a three-dimensional mesh structure (the "outside opening requirement" is satisfied). All of the non-bonding places 26' between the threads 20 of the ultrasonic welding mesh 19 and the surface to be welded 24s are open to the outside of the ultrasonic welding mesh 19, because the ultrasonic welding mesh 19 has a three-dimensional mesh structure (the "outside opening requirement" is also satisfied in this case).

The ratio of the total area of the bonding places 25 between the threads 20 of the ultrasonic welding mesh 19 and the surface to be welded 23s to the total area of the non-bonding places 25' between the threads 20 of the ultrasonic welding mesh 19 and the surface to be welded 23s is obviously considerably lower than 1 without requiring calculation and measurement, because each of the threads 20 has a substantially circular cross section (theoretically, the threads 20 are in contact with the surface to be welded only at crossing points where the threads 20 are interlaced, and thus, the "bonding place reduction requirement" is satisfied).

As in the above-described embodiments, the structure described above can reduce the volume of the ultrasonic welding member as long as it satisfies the discontinuous forming requirement, the outside opening requirement, and the bonding place reduction requirement, and thus, the structure has high flexibility in design, has high manufacturing efficiency, and can reduce the manufacturing time and cost. Further, in the ultrasonic welding member, the bonding places (weld start points) between the ultrasonic welding member and the surface to be welded are discontinuously present, and the non-bonding places are open to the outside to ensure an air path. Moreover, in the ultrasonic welding member, the ratio of areas between the bonding places and the non-bonding places is considerably lower than 1, whereby voids are less likely to remain in a welded part (air accumulation is less likely to occur inside the welding member), and high airtightness of the bonded part can be obtained. Thus, sufficient weld strength can be ensured.

The method of weaving the threads 20 of the ultrasonic welding mesh 19 is not limited to the illustrated plain weave, and may be twill weave or satin weave, for example, as long as it satisfies the above three requirements. A knitted fabric may be used, instead of the woven fabric. Moreover, the space between the warp threads 20 of the ultrasonic welding mesh 19 and the space between the weft threads 20 are not necessarily the same (that is, the mesh opening in one direction and the mesh opening in the direction intersecting the one direction are not necessarily the same). From the viewpoint of performing uniform welding within the surface to be welded, the most preferable method is the plain weave in which the space between the warp threads 20 of the ultrasonic welding mesh 19 and the space between the weft threads 20 are respectively constant, and are the same. The material of the warp threads and the material of the weft threads may be the same or different, but the same material is generally used from the viewpoint of manufacturing efficiency. Further, as an alternative embodiment, the embodiment according to FIGS. 5 and 6 may be combined with the embodiment according to FIG. 2 and/or the embodiment according to FIG. 3 and/or the embodiment according to FIG. 4. As a result, more flexible welding design is enabled in accordance with the complex three-dimensional shape of the member to be welded, and in addition, the material cost can be reduced, and the manufacturing efficiency can be further improved.

The conditions for the ultrasonic welding horn and ultrasonic welding are not particularly limited, and can be selected from known ones depending on the member to be welded which is to be used and the shape and material of the ultrasonic welding member according to the present invention.

The ultrasonic welding member according to the present invention can provide sufficient weld strength while preventing voids from remaining in the weld layer, and thus, can be particularly preferably used for ultrasonically welding members to be welded which have a complex outer shape or which include a composite material having a multilayer structure of fibers such as carbon fibers and a thin resin.

### EXAMPLES

In the following, welding was actually performed using the ultrasonic welding mesh according to the embodiment shown in FIGS. 5 and 6 as a typical example of the ultrasonic welding member according to the present invention, and after that, tensile shear strength was measured, and the cross section of a welded part was observed.

The present invention covers all the embodiments specified by the appended claims, and should not be construed as restrictive by the following Examples.

The ultrasonic welding mesh was held between a pair of thermoplastic resin plates serving as members to be welded, and these members were ultrasonically welded. An ultrasonic welder having a horn with a 20 mm x 250 mm flat surface and having an output of 3000 W was used. The welding area was 25 mm × 12.7 mm.

### [Example 1]

Flat plates made of PEEK resin were used as a pair of thermoplastic resin plates serving as members to be welded.

A plain weave mesh similarly made of PEEK resin and having a uniform mesh opening as a whole was used as the ultrasonic welding mesh, the mesh having a thread outer diameter of 0.2 mm and a mesh opening of 0.3 mm.

Ultrasonic welding was performed using these materials, and the cross section of the welded part was observed.

### [Example 2]

Ultrasonic welding was performed in the same manner as in Example 1 except that an ultrasonic welding mesh with a thread outer diameter of 0.4 mm and a mesh opening of 0.45 mm was used, and the cross section of the welded part was observed.

### [Example 3]

Ultrasonic welding was performed in the same manner as in Example 1 except that an ultrasonic welding mesh with a thread outer diameter of 0.5 mm and a mesh opening of 1.0 mm was used, and the cross section of the welded part was observed.

### [Example 4]

Flat plates made of PP resin were used as a pair of thermoplastic resin plates serving as members to be welded.

A plain weave mesh similarly made of PP resin and having a uniform mesh opening as a whole was used as the ultrasonic welding mesh, the mesh having a thread outer diameter of 0.215 mm and a mesh opening of 0.297 mm.

Ultrasonic welding was performed using these materials, and the cross section of the welded part was observed.

### [Comparative Example 1]

Ultrasonic welding was performed in the same manner as in Example 1 except that a film (0.1 mm in thickness) having a uniform thickness and made of PEEK resin was used instead of the ultrasonic welding mesh, and the cross section of the welded part was observed.

### [Comparative Example 2]

Ultrasonic welding was performed in the same manner as in Example 1 except that a sheet which was prepared by perforating a sheet (0.2 mm in thickness), having a uniform thickness and made of PEEK resin, so as to be formed into the net shape disclosed in Patent Literature 1 (JP-A-08-150669) (JP-B-3536385) was used instead of the ultrasonic welding mesh, and the cross section of the welded part was observed.

Table 1 shows the ratio of the total area of bonding places to the total area of non-bonding places for one of the surfaces to be welded and an evaluation result of an appearance of the cross section of the welded part in each of Examples and Comparative Examples described above.

Here, the cross section of the welded part was evaluated as "O" when no void (air bubbles mixed during welding) was observed, and as "X" when void was observed.

**[Table 1]**

| Test example | Matrix | Welding member | Bonding places/ Non-bonding places | Cross section of welded part |
|---|---|---|---|---|
| Example 1 | PEEK resin | PEEK resin mesh outer diameter of thread 0.2mm, | 0.17 | ○ |
| | | opening 0.3mm | | |
| Example 2 | PEEK resin | PEEK resin mesh outer diameter of thread 0.4mm, | 0.11 | ○ |
| | | opening 0.45mm | | |
| Example 3 | PEEK resin | PEEK resin mesh outer diameter of thread 0.5mm | 0.12 | ○ |
| | | opening 1.0mm | | |
| Example 4 | PP resin | PP resin mesh outer diameter of thread 0.215mm | 0.23 | ○ |
| | | opening 0.297mm | | |
| Comparative example 1 | PEEK resin | PEEK film | Bonding places are formed on entire surface | × |
| | | (thickness 0.1mm) | | |
| Comparative example 2 | PEEK resin | Net-shaped PEEK resin sheet | 2.51 | × |
| | | (thickness 0.2mm) | | |

As can be seen from Table 1, when the ultrasonic welding members satisfying all of the above-mentioned discontinuous forming requirement, outside opening requirement, and bonding place reduction requirement in Examples 1 to 4 according to the present invention were used, voids were not observed.

In contrast, when the film not satisfying any of the discontinuous forming requirement, outside opening requirement, and bonding place reduction requirement in Comparative Example 1 was used, and when the sheet not satisfying the outside opening requirement and the bonding place reduction requirement in Comparative Example 2 was used, voids resulting from air bubbles mixed during welding were observed.

### [Example 5]

A carbon fiber composite material using PEEK resin as a matrix was used as a pair of thermoplastic resin plates serving as members to be welded. A plain weave mesh made of PEEK resin and having a uniform mesh opening as a whole was used as the ultrasonic welding mesh, the mesh having a thread outer diameter of 0.5 mm and a mesh opening of 1.0 mm. Ultrasonic welding was performed using these materials, and tensile shear strength was measured.

### [Comparative Example 3]

Ultrasonic welding was performed in the same manner as in Example 5 except that a film (0.1 mm in thickness) having a uniform thickness and made of PEEK resin was used instead of the ultrasonic welding mesh, and tensile shear strength was measured.

### [Comparative Example 4]

Ultrasonic welding was performed in the same manner as in Example 5 except that a sheet which was prepared by perforating a sheet (0.2 mm in thickness), having a uniform thickness and made of PEEK resin, so as to be formed into the net shape disclosed in Patent Literature 1 (JP-A-08-150669) (JP-B-3536385) was used instead of the ultrasonic welding mesh, and tensile shear strength was measured.

Table 2 shows the ratio of the total area of bonding places to the total area of non-bonding places for one of the surfaces to be welded and the measurement result of tensile shear strength in each of Example 5 and Comparative Examples 3 and 4.

**[Table 2]**

| Test example | Matrix | Welding member | Bonding places/ Non-bonding places | Shear strength (MPa) |
|---|---|---|---|---|
| Example 5 | PEEK carbon fiber composite material | PEEK resin mesh outer diameter of thread 0.5mm | 0.12 | 44.0 |
| | | opening 1.0mm | | |
| Comparative example 3 | PEEK carbon fiber composite material | PEEK film | Bonding places are formed on entire surface | 3.4 |
| | | (thickness 0.1mm) | | |
| Comparative example 4 | PEEK carbon fiber composite material | Net-shaped PEEK resin sheet | 2.51 | Not bonded |
| | | (thickness 0.2mm) | | |

As can be seen from Table 2, when the ultrasonic welding member satisfying all of the above-mentioned discontinuous forming requirement, outside opening requirement, and bonding place reduction requirement in Example 5 according to the present invention was used, sufficiently practical shear strength was obtained. In contrast, when the film not satisfying any of the discontinuous forming requirement, outside opening requirement, and bonding place reduction requirement in Comparative Example 3 was used, and when the sheet not satisfying the outside opening requirement and the bonding place reduction requirement in Comparative Example 4 was used, only low shear strength was obtained or the members were not bonded to each other.

## Claims

1. An ultrasonic welding member which is independent of a first member and a second member and which is held between a surface to be welded of the first member including a thermoplastic resin and a surface to be welded of the second member including a thermoplastic resin and having a shape parallel to or fitted into the surface to be welded of the first member prior to ultrasonic welding between the surface to be welded of the first member and the surface to be welded of the second member,
the ultrasonic welding member including a thermoplastic resin, and
the ultrasonic welding member being configured such that:
when the ultrasonic welding member is held between the surface to be welded of the first member and the surface to be welded of the second member, bonding places between the ultrasonic welding member and the surface to be welded of the first member and/or bonding places between the ultrasonic welding member and the surface to be welded of the second member are discontinuously present in at least a part of the ultrasonic welding member;
when the ultrasonic welding member is held between the surface to be welded of the first member and the surface to be welded of the second member, all of non-bonding places between the ultrasonic welding member and the surface to be welded of the first member and/or non-bonding places between the ultrasonic welding member and the surface to be welded of the second member are open to an outside of the ultrasonic welding member; and
when the ultrasonic welding member is held between the surface to be welded of the first member and the surface to be welded of the second member, a ratio of a total area of the bonding places between the ultrasonic welding member and the surface to be welded of the first member to a total area of the non-bonding places between the ultrasonic welding member and the surface to be welded of the first member is less than 1, and/or a ratio of a total area of the bonding places between the ultrasonic welding member and the surface to be welded of the second member to a total area of the non-bonding places between the ultrasonic welding member and the surface to be welded of the second member is less than 1.

2. The ultrasonic welding member according to claim 1, wherein the ultrasonic welding member at least partially includes a plurality of streaks.

3. The ultrasonic welding member according to claim 2, wherein the ultrasonic welding member is, at least partially, a substantially lattice-shaped fabric or textile mesh, and when the ultrasonic welding member is held between the surface to be welded of the first member and the surface to be welded of the second member, crossing parts of threads of the mesh form the bonding places between the ultrasonic welding member and the surface to be welded of the first member and the bonding places between the ultrasonic welding member and the surface to be welded of the second member.

4. The ultrasonic welding member according to any one of claims 1 to 3, wherein the ultrasonic welding member has at least partially a pattern of a plurality of dots arranged at substantially regular intervals or arranged irregularly.

5. The ultrasonic welding member according to any one of claims 1 to 4, wherein the thermoplastic resin included in the ultrasonic welding member is selected from the group consisting of PP, PA6, PA66, PC, PS, PVC, polyester, ABS, PPS, PEEK, and PEKK.

6. An ultrasonic welding method comprising
a step for holding an ultrasonic welding member which is independent of a first member and a second member between a surface to be welded of the first member including a thermoplastic resin and a surface to be welded of the second member including a thermoplastic resin and having a shape parallel to or fitted into the surface to be welded of the first member, and
a step for welding the first member and the second member by applying ultrasonic vibration to the ultrasonic welding member,
wherein the ultrasonic welding member includes a thermoplastic resin, and
in the step for holding the ultrasonic welding member between the surface to be welded of the first member and the surface to be welded of the second member:
the ultrasonic welding member is disposed such that bonding places between the ultrasonic welding member and the surface to be welded of the first member and/or bonding places between the ultrasonic welding member and the surface to be welded of the second member are present discontinuously in at least a part of the ultrasonic welding member;
the ultrasonic welding member is disposed such that all of non-bonding places between the ultrasonic welding member and the surface to be welded of the first member and/or non-bonding places between the ultrasonic welding member and the surface to be welded of the second member are open to an outside of the ultrasonic welding member; and
the ultrasonic welding member is disposed such that a ratio of a total area of the bonding places between the ultrasonic welding member and the surface to be welded of the first member to a total area of the non-bonding places between the ultrasonic welding member and the surface to be welded of the first member is less than 1, and/or a ratio of a total area of the bonding places between the ultrasonic welding member and the surface to be welded of the second member to a total area of the non-bonding places between the ultrasonic welding member and the surface to be welded of the second member is less than 1.

7. The ultrasonic welding method according to claim 6, wherein the ultrasonic welding member at least partially includes a plurality of streaks.

8. The ultrasonic welding method according to claim 7, wherein the ultrasonic welding member is, at least partially, a substantially lattice-shaped fabric or textile mesh, and when the ultrasonic welding member is held between the surface to be welded of the first member and the surface to be welded of the second member, crossing parts of threads of the mesh form the bonding places between the ultrasonic welding member and the surface to be welded of the first member and the bonding places between the ultrasonic welding member and the surface to be welded of the second member.

9. The ultrasonic welding method according to any one of claims 6 to 8, wherein the ultrasonic welding member has at least partially a pattern of a plurality of dots arranged at substantially regular intervals.

10. The ultrasonic welding method according to any one of claims 6 to 9, wherein the thermoplastic resin included in the ultrasonic welding member is selected from the group consisting of PP, PA6, PA66, PC, PS, PVC, polyester, ABS, PPS, PEEK, and PEKK.
